# EUROPEAN PATENT SPECIFICATION

(11) **EP 3 158 686 B1**
(45) Date of publication and mention of the grant of the patent: **08.01.2020**
(21) Application number: 15811975.0
(22) Date of filing: 26.06.2015
(51) Int. Cl.: H04L 12/24, G06F 9/50, H04L 29/06

(54) **SYSTEM AND METHOD FOR VIRTUAL NETWORK FUNCTION POLICY MANAGEMENT**
SYSTEM UND VERFAHREN FÜR RICHTLINIENVERWALTUNG VIRTUELLER NETZWERKFUNKTIONEN
SYSTÈME ET PROCÉDÉ DE GESTION DE POLITIQUES DE FONCTIONS VIRTUELLES DE RÉSEAU

(30) Priority: 26.06.2014 US 201462017718 P
(43) Date of publication of application: 26.04.2017
(73) Proprietor: HUAWEI TECHNOLOGIES CO., LTD., Shenzhen Guangdong 518129 (CN)
(72) Inventor: XIANG, Zhixian, Plano, Texas 75024 (US)
(74) Representative: Gill Jennings & Every LLP
(86) International application number: PCT/CN2015/082537
(87) International publication number: WO 2015/197025

(56) References cited:
- CN-A- 101 763 226
- CN-A- 103 853 986
- US-A1- 2012 265 863
- "Network Function Virtualization (NFV) Management and Orchestration;GS NFV-MAN 001", ETSI DRAFT; GS NFV-MAN 001, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, no. V0.5.0, 3 June 2014 (2014-06-03), pages 1-193, XP014228643, [retrieved on 2014-06-03]
- HUAWEI: "Section 5.5.1 VNF policy management;NFVSWA(14)000148_Changes_to_sec tion_5_5_1-policy_management", ETSI DRAFT; NFVSWA(14)000148_CHANGES_TO_SECTION_5_5_1- POLICY_MANAGEMENT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, 15 April 2014 (2014-04-15) , page 1, XP014229841, [retrieved on 2014-04-15]
- ERICSSON: "Chapter 5 comment resolution;NFVSWA(14)000184r2_Chapter_5_co mment_resolution", ETSI DRAFT; NFVSWA(14)000184R2_CHAPTER_5_COMMENT_RESOL UTION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. ISG - NFV, 30 April 2014 (2014-04-30) , pages 1-11, XP014229877, [retrieved on 2014-04-30]

## Description

### TECHNICAL FIELD

The present invention relates to a system and method for network functions virtualization (NFV), and, in particular embodiments, to a system and method for virtual network function (VNF) policy management.

### BACKGROUND

NFV (network function virtualization) is an industry effort to virtualize network equipment using a general-build hardware platform to provide cost reduction, operation efficiency and agility. European Telecommunications Standards Institute (ETSI) NFV Industry Specification Group (ISG) is the organization developing a framework for NFV. NFV is the principle of separating network functions from the hardware they run on through virtual hardware abstraction (See Network Functions Virtualization (NFV); Infrastructure Overview, ETSI GS NFV-INF 001 VI.1.1 (2015-01), http://www.etsi.org/deliver/etsi_gs/NFV-INF/001_099/001/01.01.01_60/gs_NFV-INF001v010101p.pdf) (Note: The ETSI documents use the British spelling of "virtualisation" with an "s." This application uses the American spelling of "virtualization" with a "z.")

Run-time instantiations of the virtual network functions (VNFs) (referred to as "VNF instances") are created by completing the instantiation of the VNF software on an NFV host, as well as by establishing connectivity between the VNF instances. This can be accomplished using the VNF deployment and operational information captured in a VNF descriptor (VNFD), as well as additional run-time instance-specific information and constraints. The VNF instance requires a designation of the capacity required for that instance.

"Network Function Virtualization (NFV) Management and Orchestration;GS NFV-MAN 001 ", ETSI DRAFT; GS NFV-MAN 001, EUROPEAN TELECOMMUNICATIONS STANDARDS INSTITUTE (ETSI), 650, ROUTE DES LUCIOLES; F-06921 SOPHIA-ANTIPOLIS; FRANCE, val. ISG- NFV, no. V0.5.0, 3 June 2014 is a previous version of the specification of the technical standard discussed above.

HUAWEI: "Section 5.5.1 VNF policy management; NFVSWA(14)000148 _Changes _ to _section_5_5_1-policy management", ETSI DRAFT; NFVSWA(14)000148_CHANGES_ TO_SECTION_5_5_1-POLICY MANAGEMENT, EUROPEAN ELECOMMUNICATIONS STANDARDS INSTITUTE (ETSI), 650, ROUTE DES LUCIOLES ; F-06921 SOPHIA-ANTIPOLIS ; FRANCE, val. ISG- NFV, 15 April2014 (2014-04-15) discusses policy management in network function virtualisation systems.

ERICSSON: "Chapter 5 comment resolution; NFVSWA (14)000184r2_Chapter_5_ comment_resolution", ETSI DRAFT; NFVSWA(14)000184R2_CHAPTER_5_COMMENT _RESOLUTION, EUROPEAN TELECOMMUNICATIONS STANDARDS INSTITUTE (ETSI), 650, ROUTE DES LUCIOLES ; F-06921 SOPHIA-ANTIPOLIS ; FRANCE, val. ISG-NFV, 30 April2014 proposes changes in policy management in network function virtualisation systems.

### SUMMARY

In a first aspect, a method is provided. The method comprises: a network function virtualization, NFV, manager obtaining a plurality of policies for managing a plurality of virtual network function, VNF, instances on a computing platform; and the NFV manager defining at least one VNF instance operating on the computing platform, wherein the at least one VNF instance has a definition comprising a policy indication indicating acceptance, modification, or rejection of at least one of the plurality of policies managed by the NFV manager; wherein the at least one VNF instance includes a plurality of policies and corresponding policy indications; wherein the policy indication indicates a policy priority between a VNF-provided policy and a NFV manager-provided policy if the VNF-provided policy and the NFV manager-provided policy conflict, and wherein the VNF manager follows the policy priority to apply a corresponding policy; wherein the policy indication can be configured through a management interface between the at least one VNF instance and NFV management functions.

In a second aspect, a network function virtualization (NFV) manager is provided. The NFV manager comprises a processor; and a non-transitory computer readable storage medium storing programming for execution by the processor, the programming including instructions for: obtaining a plurality of policies for managing a plurality of virtual network function, VNF, instances on a computing platform; and defining at least one VNF instance operating on the computing platform, wherein the at least one VNF instance has a definition comprising a policy indication indicating acceptance, modification, or rejection of at least one of the plurality of policies managed by the NFV manager; wherein the at least one VNF instance includes a plurality of policies and corresponding policy indications; wherein the policy indication indicates a policy priority between a VNF-provided policy and a NFV manager-provided policy if the VNF-provided policy and the NFV manager-provided policy are overlapping, and wherein the VNF manager follows the policy priority to apply a corresponding policy; wherein the policy indication can be configured through a management interface between the at least one VNF instance and NFV management functions.

### BRIEF DESCRIPTION OF THE DRAWINGS

For a more complete understanding of the present invention, and the advantages thereof, reference is now made to the following descriptions taken in conjunction with the accompanying drawing, in which:
FIG. 1 illustrates a simple functional network;
FIG. 2 illustrates an implementation of the functional network of FIG. 1 using network virtualization;
FIG. 3 illustrates a functional diagram of a platform suitable for network virtualization;
FIG. 4 illustrates a policy administration interface of an NFV system;
FIG. 5 illustrates a table of VNF policy indications according to an embodiment of the invention;
FIG. 6 illustrates a process flow that may be used to implement the embodiment of FIG. 5;
FIG. 7 illustrates a policy administration interface modified in accordance with an embodiment;
FIG. 8 illustrates a process for updating policy capabilities in accordance with an embodiment;
FIG. 9 illustrates a computing platform that may be used for implementing, for example, the devices and methods described herein, in accordance with an embodiment; and
FIG. 10 illustrates a telecommunications system, in which one or more of the embodiments of the disclosure may be implemented.

### DETAILED DESCRIPTION OF ILLUSTRATIVE EMBODIMENTS

The structure, manufacture and use of the preferred embodiments are discussed in detail below. It should be appreciated, however, that the present invention provides many applicable inventive concepts that can be embodied in a wide variety of specific contexts. The specific embodiments discussed are merely illustrative of specific ways to make and use the invention, and do not limit the scope of the invention.

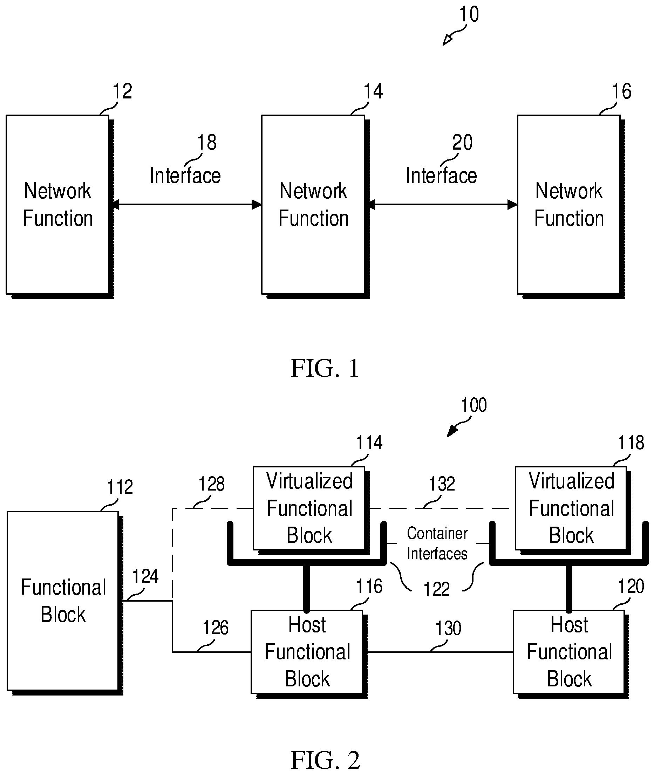

FIG. 1 illustrates a simple functional network 10. Complex networks are commonly organized as functional blocks connected by defined interfaces. Network 10 includes functional blocks 12, 14 and 16. Each function defines a state and transfer function that defines how the function will behave with regard to inputs received and outputs provided. The inputs received and the outputs provided are defined by interfaces 18 and 20. Each function is relatively autonomous within its definition. The organization of complex networks, such as telecommunications networks, is challenging because it is necessary to incorporate rapidly-evolving technology and to accommodate rapid network growth while maintaining high reliability. The functional block scheme has been an effective tool in managing such complex networks because it allows for replacing, repairing, upgrading or adding functions with minimal disruption to the rest of the network.

However, most functions operate on hardware devoted to that function. This makes some aspects of functional design more difficult. For example, scaling is more difficult because changing or adding to a function often involves adding or upgrading the hardware. This may involve considerable cost in a far flung network, like a telecommunications network. These issues have led to the development of virtual network functions.

FIG. 2 illustrates a functional network 100 implementation of FIG. 1 using network virtualization. FIG. 2 is an illustration of implementing network 10 with Network Functions Virtualization (NFV). Network 100 includes traditional blocks such as functional block 112. Interface 124 communicates with both virtual interface 128 and host interface 126. Virtual functional block 114 is created by a software module with a specific design. The state and function of a traditional network block, such as block 14 of FIG. 1, are coded into virtualized functional block 114 and loaded into an operating system including container interfaces 122. Container interface 122 defines how virtual functional block 114 and its interface functions are loaded onto and supported by host functional block 116. From the standpoint of the operation of the network, there is no difference in the operation of virtualized functional block 114 and functional block 14 of FIG. 1. Similarly, virtual interface 132 and host interface 130 communicate with virtualized functional block 118 and host functional block 120, which define the function of Network function 16 (FIG. 1) using container interface 122.

Although host functional blocks 116 and 120 are shown as separated elements in FIG. 2, they are not necessarily separate machines. The host functional blocks are composed of computing resources (processing, storage, communication, *etc*.) provided in a pool of resources. The functional blocks are a portion of that pool of resources as defined by the parameters specified in virtual functional blocks 114 and 118. This allows the network operator to flexibly deploy network resources as needed. For example, a subscriber (e.g. a cellphone network subscriber) may choose among several available services, such as voice mail transcription. Some subscribers may choose this option and some may not. If a subscriber chooses to subscribe to this service, a virtual functional block may be deployed to provide that service. At an additional level of sophistication, the virtual functional block may only be deployed when needed. In non-virtualized networks, machines and software to run those machines must be available to provide the necessary services. This requires additional unused capacity to ensure the availability of the services, which is expensive. On the other hand, a misjudgment regarding the need for reserve capacity can lead to service outages.

A virtualized network allows the network operator to use the available capacity for nearly all network functions. Additional marginal capacity is still necessary. However, when the various functions of the network are deployed on to a pool of resources, it is not necessary to have marginal capacity available for every function. Therefore, the total additional capacity of a virtualized network can be much smaller than the combined additional capacity necessary for all of the functions of a non-virtualized network. However, to effectively deploy a virtualized network requires a sophisticated function management system.

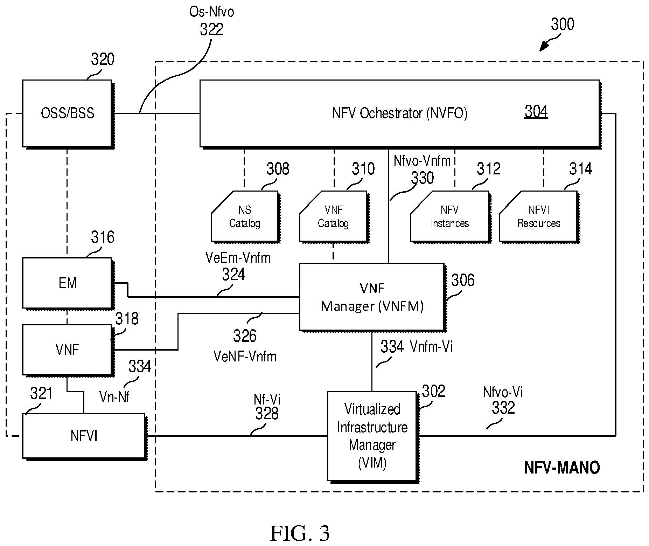

FIG. 3 is a functional diagram of a NFV manager 300 suitable for network virtualization. One such system is described in Network Functions Virtualization (NFV): Management and Orchestration (NFV-MANO), ETSI NFV-MAN 001 v1.1.1 (2014-12), http://www.etsi.org/deliver/etsi_gs/NFV-MAN/001_099/001/01.01.01_60/gs_NFV-MAN001v010101p.pdf. The NFV manager 300 may comprise or incorporate NFV-MANO functionalities in some embodiments. The NFV manager 300 in some examples includes the following functional blocks as shown in FIG. 3:
- Virtualized Infrastructure Manager (VIM) 302;
- NFV Orchestrator (NFVO) 304; and
- VNF Manager (VNFM) 306.

The architectural framework of NFV manager 300 (NFV-MANO) in some examples includes the following data repositories:
- Network Service (NS) Catalogue 308;
- Virtualized Network Function (VNF) Catalogue 310;
- Network Functions Virtualization (NFV) Instances repository 312; and
- Network Functions Virtualization Infrastructure (NFVI) Resources repository 314.

The architectural framework of NFV manager 300 (NFV-MANO) in some examples includes the following functional blocks that share interfaces with the NFV manager 300:
- Element Management (EM) 316;
- Virtualized Network Function (VNF) 318;
- Operation System Support (OSS) and Business System Support functions (BSS) 320; and
- NFV Infrastructure (NFVI) 321.

The architectural framework of NFV manager 300 (NFV-MANO) in some examples includes the following interfaces:
- Os-Nfvo 322, an interface between OSS/BSS and NFVO;
- VeEm-Vnfm 324, an interface between EM and VNFM;
- VeNF-Vnfm 326, an interface between VNF and VNFM;
- Nf-Vi 328, an interface between NFVI and VIM;
- Nfvo-Vnfm 330, an interface between NFVO and VNFM;
- Nfvo-Vi 332, an interface between NFVO and VIM; and
- Vn-Vi 334, an interface between VIM and VNFM.

An important function of the NFV management system is policy management. Network policy control refers to a system that enables the definition and application of business and operational policies to the virtual network. A policy: 1) establishes conditions, 2) evaluates conditions, and 3) enforces actions. A policy may be implemented to establish control of the behavior of customers/subscribers to the network. For example, a policy may be that a certain level of subscription has a limit on its use. The evaluation of the policy determines whether the subscriber has reached the limit. The enforcement action may be denial of access if that limit has been reached.

Another type of policy is directed to the operation of functions. For example, a policy may limit the traffic on a particular communications channel in order to maintain orderly operation of the channel. If there is too much traffic directed to that channel, the policy may be to throttle (slow) access to keep the traffic below the level set by the policy.

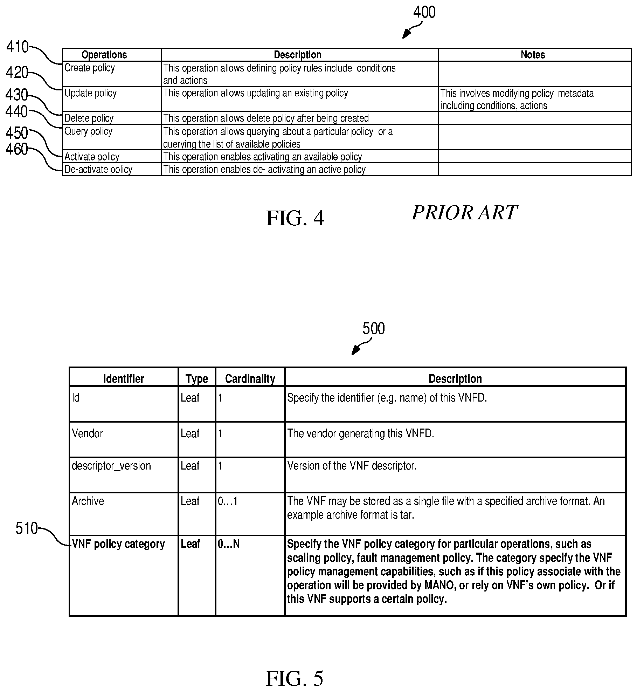

FIG. 4 illustrates a policy administration interface 400 of an NFV system. Section 7.4 of the NFV-MANO standard describes a policy administration interface 400 in a virtualization system. In addition, Section 7.4.2 describes the operations that the network operator, such as an owner of the host functional blocks 116 and 120, for example, can perform vis-à-vis implementation of policies. Operation 410 allows the NFV-MANO operator to create a policy. Operation 420 allows the NFV-MANO operator to update a policy. Operation 430 allows the NFV-MANO operator to delete a policy. Operation 440 allows the NFV-MANO to query a policy for its contents or a list of policies in effect. Operation 450 allows the NFV-MANO to activate a policy. Operation 460 allows the NFV-MANO to de-activate a policy.

However, the orchestration and management for NFV-MANO functions and VNF can be provided by different vendors. Each VNF has a separated capability and may provide a corresponding policy according its capability. In addition, a VNF can have its own policy management system. In that case, the policy that guides its operation can come from the VNF provider. The policies established for by the NFV-MANO may or may not conflict with the capability and function of the VNF. That is, both VNF and NFV-MANO can provide a similar but conflicting policy for an operation. However, there currently is no VNF policy capability defined in a VNF descriptor (VNFD) in the NFV-MANO system. The NFV-MANO needs to know VNF's policy capability for certain operations, but there is no mechanism for this.

An embodiment of the present disclosure provides systems and methods for VNF policy management category indications. A specific embodiment includes a VNF policy category for use by NFV-MANO for policy based management. In certain embodiments, VNF policy management categories may be based on capability, type, or other indications. When provided, these policy management indications are used by NFV-MANO to conduct the policy management interaction with the VNF.

An embodiment of the present invention creates VNF policy management categories to organize and present the policy capabilities of individual VNFs. For example, three types of VNF policy management categories may be created: fully policed VNF, not policed VNF, and partly policed VNF.
- For a fully policed VNF, the NFV-MANO provides full VNF policy administration for the VNF.
- For a non-policed VNF, the NFV-MANO does not provide any VNF policy administration for the VNF. The VNF provides policy management by itself.
- For a partly policed VNF, the NFV-MANO provides some but not all of the VNF polices for the VNF (*e.g*., a scaling up/down policy is managed by the VNF itself, while a scaling in/out policy is managed by the NFV-MANO).

In another embodiment, the following VNF policy management categories are used:
- For a fully policed VNF, the NFV-MANO provides full VNF policy administration for the VNF.
- For a non-policed VNF, the NFV-MANO does not provide any VNF policy administration for the VNF. The VNF provides policy management by itself.

These VNF categories establish the source of policies between the VNF and the NFV-MANO. The category is selected as an information element in the VNFD, which is included in the VNF package provided by the VNF provider. The category selection can be used by the VNF manager (VNFM) 306 and the NFV orchestrator (NFVO) 304. This information can be statically or dynamically configured. In addition, in the VNF categories, parameters may be passed through the operation interfaces between VNF and NVF-MANO during run time operations, such as the policy administration interface.

The VNF capability can be represented as a Boolean type to indicate whether the VNF requires or supports policy from the NFV-MANO, and whether the policy from the NFV-MANO can overwrite or has higher priority than the policy provided by VNF itself.

The VNF policy management capability can have a sub-leaf structure for each individual type of policy or operation, such as whether scaling policy can come from the NFV-MANO, or upgrade policy will be delivered from the NFV-MANO. For example, a sub-leaf to an upgrade policy may be an indication of whether that upgrade is delivered from the NFV-MANO or by other means.

FIG. 5 illustrates a table of VNF policy indications according to an embodiment. An example NFV-MANO group specification (GS) contribution introduces a VNF policy category 510 as shown in table 500 in FIG. 5. VNF policy category 510 provides the data indicating which policy category (*i.e.* fully policed, partly policed or non-policed) applies to the VNF defined by the VNFD.

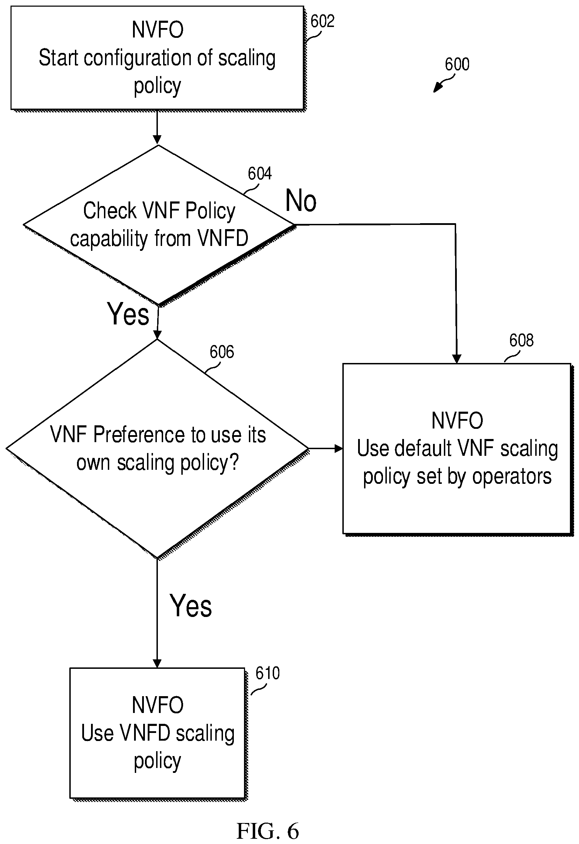

FIG. 6 illustrates a process flow that may be used to implement the embodiment of FIG. 5. FIG. 6 is a diagram of a process flow 600 of an embodiment of the present invention. In this example, the source of a scaling policy is determined. In step 602, the NVFO initiates configuration of the scaling policy. In step 604, the VNFD is read to determine if the VNF in question has a scaling policy. If not, the process skips to step 608 and the NVF-MANO will set this policy according to the defaults established by the operators of the NVF system. In step 606, the VNF policy category 510 is read to determine if the preference is for the VNF to use its own scaling policy. If NO, then, in step 608, the NVFO sets the policy according to the defaults established by the operators of the NVF system. If YES, then, in step 610, the NVFO adopts the scaling policy in the VNFD.

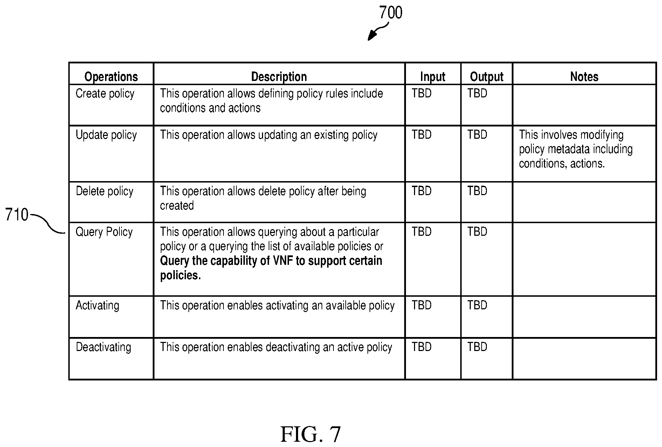

FIG. 7 illustrates a policy administration interface modified in accordance with an embodiment. Figure 7 shows a policy administration interface 700 similar to policy administration interface 400 of FIG. 4, but modified in accordance with an embodiment. Specifically, query policy 710, in addition to including "[t]his operation allows querying about a particular policy or a querying the list of available policies" provides for a feedback of "the capability of VNF to support certain policies." Thus, query 710 provides a tool to determine if a policy conflict exists.

The described embodiments solve policy conflicts between the VNF and the NFV-MANO system and give operators more flexibility and intelligence on VNF allocation and management. These embodiments may be implemented in all network equipment virtualized using the NFV and similar systems, such as any network function that is virtualized following the ETSI NFV specification. Of course, although the described embodiments are implemented on the ETSI NFV system, these embodiments are exemplary and the principles described herein may be advantageously applied to other virtualization systems.

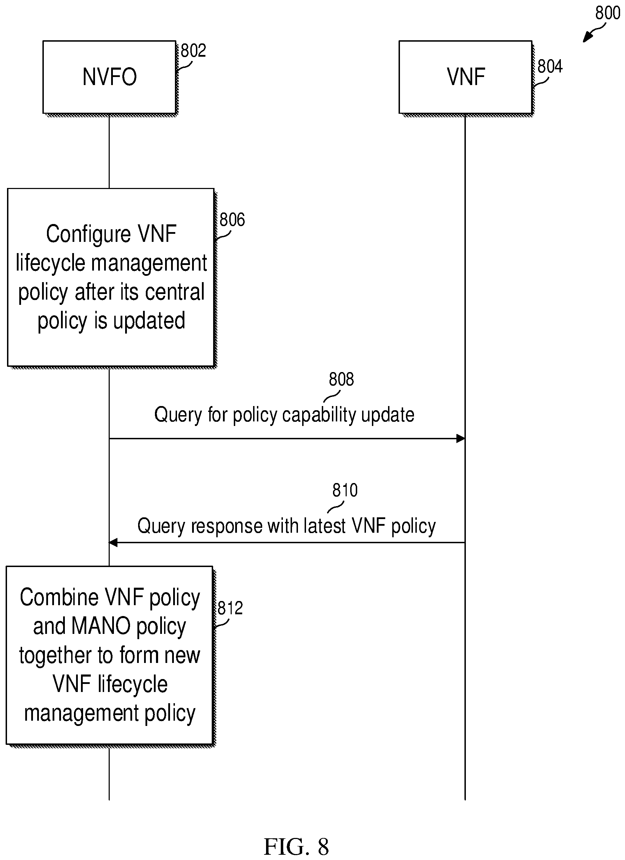

FIG. 8 illustrates a process for updating policy capabilities in accordance with an embodiment. Figure 8 shows an embodiment update process 800. After the process of FIG. 6 establishes the initial policy assignments between the NVFO and the VNF, upon loading the VNF into the VNF catalog 310, the VNF may be updated with different capabilities. To account for this, the NVFO 802 periodically initiates a configure VNF lifecycle management policy update in step 806. In step 808, the NVFO queries the VNF for a policy capability update. The VNF responds in step 810. In step 812, using policy category 510 and process 600, NVFO determines if the new capability necessitates updating the policy control assignment between VNF 804 and NFVO 802.

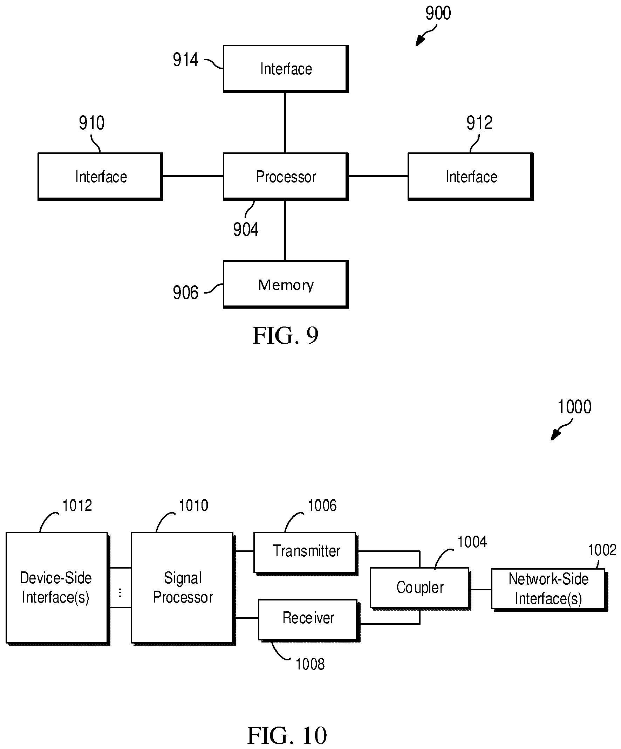

FIG. 9 illustrates a computing platform that may be used for implementing, for example, the devices and methods described herein, in accordance with an embodiment. FIG. 9 illustrates a block diagram of an embodiment processing system 900 for performing methods described herein, which may serve as a host device for the VNF manager 300. As shown, the processing system 900 includes a processor 904, a memory 906, and interfaces 910-914, which may (or may not) be arranged as shown in FIG. 9. The processor 904 may be any component or collection of components adapted to perform computations and/or other processing related tasks. In a virtualized network, processor 904 may consist of thousands or processing devices, such as so-called "blade" computers. Memory 906 may be any component or collection of components adapted to store programming and/or instructions for execution by the processor 904. In an embodiment, the memory 906 includes a non-transitory computer readable medium. The interfaces 910, 912, 914 may be any component or collection of components that allow the processing system 900 to communicate with other devices/components and/or a user. In some embodiments, one or more of the interfaces 910, 912, 914 connects the processing system 900 to a transceiver adapted to transmit and receive signaling over the telecommunications network. For example, one or more of the interfaces 910, 912, 914 may be adapted to communicate data, control, or management messages from the processor 904 to applications installed on the host device and/or a remote device. As another example, one or more of the interfaces 910, 912, 914 may be adapted to allow a user or user device (e.g., personal computer (PC), etc.) to interact/communicate with the processing system 900. The processing system 900 may include additional components not depicted in FIG. 9, such as long term storage (e.g., non-volatile memory, etc.).

In some embodiments, the processing system 900 is included in a network device that is accessing, or part otherwise of, a telecommunications network. In one example, the processing system 900 is in a network-side device in a wireless or wireline telecommunications network, such as a base station, a relay station, a scheduler, a controller, a gateway, a router, an applications server, or any other device in the telecommunications network. In other embodiments, the processing system 900 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

FIG. 10 illustrates a telecommunications system, in which one or more of the embodiments of the disclosure may be implemented. FIG. 10 includes a block diagram of a transceiver 1000 adapted to transmit and receive signaling over a telecommunications network. The transceiver 1000 may be installed in a host device and some or all of its components may be virtualized. As shown, the transceiver 1000 comprises a network-side interface 1002, a coupler 1004, a transmitter 1006, a receiver 1008, a signal processor 1010, and a device-side interface 1012. The network-side interface 1002 may include any component or collection of components adapted to transmit or receive signaling over a wireless or wireline telecommunications network. The coupler 1004 may include any component or collection of components adapted to facilitate bi-directional communication over the network-side interface 1002. The transmitter 1006 may include any component or collection of components (e.g., up-converter, power amplifier, etc.) adapted to convert a baseband signal into a modulated carrier signal suitable for transmission over the network-side interface 1002. The receiver 1008 may include any component or collection of components (e.g., down-converter, low noise amplifier, etc.) adapted to convert a carrier signal received over the network-side interface 1002 into a baseband signal. The signal processor 1010 may include any component or collection of components adapted to convert a baseband signal into a data signal suitable for communication over the device-side interface(s) 1012, or vice-versa. The device-side interface(s) 1012 may include any component or collection of components adapted to communicate data-signals between the signal processor 1010 and components within the host device (e.g., the processing system 600, local area network (LAN) ports, etc.).

The transceiver 1000 may transmit and receive signaling over any type of communications medium. In some embodiments, the transceiver 1000 transmits and receives signaling over a wireless medium. For example, the transceiver 1000 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 1002 comprises one or more antenna/radiating elements. For example, the network-side interface 1002 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 1000 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method comprising:
a network function virtualization, NFV, manager obtaining a plurality of policies for managing a plurality of virtual network function, VNF, instances on a computing platform; and
the NFV manager defining at least one VNF instance operating on the computing platform, wherein the at least one VNF instance has a definition comprising a policy indication indicating acceptance, modification, or rejection of at least one of the plurality of policies managed by the NFV manager;
wherein the policy indication can be configured through a management interface between the at least one VNF instance and NFV management functions;
wherein the at least one VNF instance includes a plurality of policies and corresponding policy indications; and
wherein the policy indication indicates a policy priority between a VNF-provided policy and a NFV manager-provided policy if the VNF-provided policy and the NFV manager-provided policy conflict, and wherein the VNF manager follows the policy priority to apply a corresponding policy.

2. The method claim 1, wherein if the policy indication indicates rejection of one, multiple, or all of the policies which are provided by the NFV manager, a VNF policy provided with a VNF descriptor is implemented.

3. The method of claim 1, wherein if the policy indication indicates modification of the policies, a VNF descriptor includes an indication of which VNF manager policies are accepted.

4. The method of claim 1, further comprising:
monitoring the at least one VNF instance to determine if the capabilities of the at least one VNF instance have been updated; and
if the at least one VNF instance has been updated, determining if the NFV manager or the at least one VNF instance determines the at least one of the plurality of policies based on the policy indication.

5. The method of claim 1, wherein the NFV manager implements one or more of NFV management functions or NFV orchestrator functions.

6. The method of claim 1, wherein the policy indication includes a sub-leaf structure for the at least one of the plurality of policies.

7. The method of claim 1, wherein the policy indication includes a sub-leaf structure for the at least one of the plurality of policies and wherein the sub-leaf structure indicates whether the at least one of the plurality of policies is an upgrade policy that will be delivered from the NFV manager.

8. A network function virtualization, NFV, manager (900) comprising:
a processor (904); and
a non-transitory computer readable storage medium (906) storing programming for execution by the processor, the programming including instructions for:
obtaining a plurality of policies for managing a plurality of virtual network function, VNF, instances on a computing platform; and
defining at least one VNF instance operating on the computing platform, wherein the at least one VNF instance has a definition comprising a policy indication indicating acceptance, modification, or rejection of at least one of the plurality of policies managed by the NFV manager;
wherein the policy indication can be configured through a management interface between the at least one VNF instance and NFV management functions;
wherein the at least one VNF instance includes a plurality of policies and corresponding policy indications; and
wherein the policy indication indicates a policy priority between a VNF-provided policy and a NFV manager-provided policy if the VNF-provided policy and the NFV manager-provided policy conflict, and wherein the VNF manager follows the policy priority to apply a corresponding policy.

9. The NFV manager (900) of claim 8, wherein if the policy indication indicates rejection of one, multiple, or all of the policies which are provided by the NFV manager, a VNF policy provided with a VNF descriptor is implemented.

10. The NFV manager (900) of claim 8, wherein if the policy indication indicates modification of the policies, a VNF descriptor includes an indication of which VNF manager policies are accepted.

11. The NFV manager (900) of claim 8, wherein the programming further includes instructions for:
monitoring the at least one VNF instance to determine if the capabilities of the at least one VNF instance have been updated; and
if the at least one VNF instance has been updated, determining if the NFV manager or the at least one VNF instance determines the at least one of the plurality of policies based on the policy indication.

12. The NFV manager (900) of claim 8, wherein the NFV manager implements one or more of NFV management functions or NFV orchestrator functions.

13. The NFV manager (900) of claim 8, wherein the policy indication includes a sub-leaf structure for the at least one of the plurality of policies.

14. The NFV manager (900) of claim 8, wherein the policy indication includes a sub-leaf structure for the at least one of the plurality of policies and wherein the sub-leaf structure indicates whether the at least one of the plurality of policies is an upgrade policy that will be delivered from the NFV manager.

## Patentansprüche

1. Verfahren, umfassend:
einen Netzwerkfunktionsvirtualisierungs-, NFV, Verwalter, der eine Mehrzahl von Richtlinien zur Verwaltung einer Mehrzahl von virtuellen Netzwerkfunktions-, VNF, Instanzen auf einer Rechenplattform erhält; und
wobei der NFV-Verwalter mindestens eine VNF-Instanz definiert, die auf der Rechenplattform läuft, wobei die mindestens eine VNF-Instanz eine Definition aufweist, die eine Richtlinienangabe umfasst, die eine Annahme, Änderung oder Ablehnung mindestens einer von der Mehrzahl von Richtlinien, die von dem NFV-Verwalter verwaltet werden, angibt;
wobei die Richtlinienangabe durch eine Verwaltungsschnittstelle zwischen der mindestens einen VNF-Instanz und NFV-Verwaltungsfunktionen konfiguriert werden kann;
wobei die mindestens eine VNF-Instanz eine Mehrzahl von Richtlinien und entsprechenden Richtlinienangaben enthält; und
wobei die Richtlinienangabe ebenfalls eine Richtlinienpriorität zwischen einer VNFbereitgestellten Richtlinie und einer NFV-Verwalter-bereitgestellten Richtlinie angibt, wenn die VNF-bereitgestellte Richtlinie und die NFV-Verwalterbereitgestellte Richtlinie kollidieren, und wobei der VNF-Verwalter der Richtlinienpriorität folgt, um eine entsprechende Richtlinie anzuwenden.

2. Verfahrensanspruch 1, wobei, wenn die Richtlinienangabe eine Ablehnung von einer, mehreren oder allen der Richtlinien angibt, die von dem NFV-Verwalter bereitgestellt werden, eine VNF-Richtlinie implementiert wird, die mit einem VNF-Deskriptor versehen ist.

3. Verfahren nach Anspruch 1, wobei, wenn die Richtlinienangabe eine Änderung der Richtlinien angibt, ein VNF-Deskriptor eine Angabe darüber enthält, welche VNF-Verwalterrichtlinien angenommen werden.

4. Verfahren nach Anspruch 1, ferner umfassend:
Überwachen der mindestens einen VNF-Instanz, um zu ermitteln, ob die Fähigkeiten der mindestens einen VNF-Instanz aktualisiert worden sind; und
wenn die mindestens eine VNF-Instanz aktualisiert worden ist, Ermitteln, ob der NFV-Verwalter oder die mindestens eine VNF-Instanz die mindestens eine der Mehrzahl von Richtlinien auf Grundlage der Richtlinienangabe ermittelt.

5. Verfahren nach Anspruch 1, wobei der NFV-Verwalter eine oder mehrere von NFV-Verwaltungsfunktionen oder NFV-Orchestratorfunktionen implementiert.

6. Verfahren nach Anspruch 1, wobei die Richtlinienangabe eine "Sub-Leaf'-Struktur für die mindestens eine von der Mehrzahl von Richtlinien enthält.

7. Verfahren nach Anspruch 1, wobei die Richtlinienangabe eine "Sub-Leaf'-Struktur für die mindestens eine von der Mehrzahl von Richtlinien enthält, und wobei die "Sub-Leaf'-Struktur angibt, ob die mindestens eine von der Mehrzahl von Richtlinien eine "Upgrade"-Richtlinie ist, die von dem NFV-Verwalter ausgeliefert werden wird.

8. Netzwerkfunktionsvirtualisierungs-, NFV, Verwalter (900), umfassend:
einen Prozessor (904); und
ein nichtflüchtiges computerlesbares Speichermedium (906), das eine Programmierung zur Ausführung durch den Prozessor speichert, die Programmierung enthaltend Anweisungen zum:
Erhalten einer Mehrzahl von Richtlinien zur Verwaltung einer Mehrzahl von virtuellen Netzwerkfunktions-, VNF, Instanzen auf einer Rechenplattform; und
Definieren mindestens einer VNF-Instanz, die auf der Rechenplattform läuft, wobei die mindestens eine VNF-Instanz eine Definition aufweist, die eine Richtlinienangabe umfasst, die eine Annahme, Änderung oder Ablehnung mindestens einer von der Mehrzahl von Richtlinien, die von dem NFV-Verwalter verwaltet werden, angibt;
wobei die Richtlinienangabe durch eine Verwaltungsschnittstelle zwischen der mindestens einen VNF-Instanz und NFV-Verwaltungsfunktionen konfiguriert werden kann;
wobei die mindestens eine VNF-Instanz eine Mehrzahl von Richtlinien und entsprechenden Richtlinienangaben enthält; und
wobei die Richtlinienangabe ebenfalls eine Richtlinienpriorität zwischen einer VNFbereitgestellten Richtlinie und einer NFV-Verwalter-bereitgestellten Richtlinie angibt, wenn die VNF-bereitgestellte Richtlinie und die NFV-Verwalterbereitgestellte Richtlinie kollidieren, und wobei der VNF-Verwalter der Richtlinienpriorität folgt, um eine entsprechende Richtlinie anzuwenden.

9. NFV-Verwalter (900) nach Anspruch 8, wobei, wenn die Richtlinienangabe eine Ablehnung von einer, mehreren oder allen der Richtlinien angibt, die von dem NFV-Verwalter bereitgestellt werden, eine VNF-Richtlinie implementiert wird, die mit einem VNF-Deskriptor versehen ist.

10. NFV-Verwalter (900) nach Anspruch 8, wobei, wenn die Richtlinienangabe eine Änderung der Richtlinien angibt, ein VNF-Deskriptor eine Angabe darüber enthält, welche VNF-Verwalterrichtlinien angenommen werden.

11. NFV-Verwalter (900) nach Anspruch 8, wobei die Programmierung ferner Anweisungen für Folgendes enthält:
Überwachen der mindestens einen VNF-Instanz, um zu ermitteln, ob die Fähigkeiten der mindestens einen VNF-Instanz aktualisiert worden sind; und
wenn die mindestens eine VNF-Instanz aktualisiert worden ist, Ermitteln, ob der NFV-Verwalter oder die mindestens eine VNF-Instanz die mindestens eine der Mehrzahl von Richtlinien auf Grundlage der Richtlinienangabe ermittelt.

12. NFV-Verwalter (900) nach Anspruch 8, wobei der NFV-Verwalter eine oder mehrere von NFV-Verwaltungsfunktionen oder NFV-Orchestratorfunktionen implementiert.

13. NFV-Verwalter (900) nach Anspruch 8, wobei die Richtlinienangabe eine "Sub-Leaf'-Struktur für die mindestens eine von der Mehrzahl von Richtlinien enthält.

14. NFV-Verwalter (900) nach Anspruch 8, wobei die Richtlinienangabe eine "Sub-Leaf'-Struktur für die mindestens eine von der Mehrzahl von Richtlinien enthält, und wobei die "Sub-Leaf'-Struktur angibt, ob die mindestens eine von der Mehrzahl von Richtlinien eine "Upgrade"-Richtlinie ist, die von dem NFV-Verwalter ausgeliefert werden wird.

## Revendications

1. Procédé, comprenant :
par un gestionnaire de virtualisation de fonction de réseau, NFV, l'obtention d'une pluralité de politiques pour gérer une pluralité de cas de fonction de réseau virtuelle, VNF, sur une plateforme informatique ; et
par le gestionnaire de NFV, la définition d'au moins un cas de VNF fonctionnant sur la plateforme informatique, dans lequel l'au moins un cas de VNF possède une définition comprenant une indication de politique indiquant l'acceptation, la modification, ou le rejet d'au moins l'une de la pluralité de politiques gérées par le gestionnaire de NFV ;
dans lequel l'indication de politique peut être configurée par l'intermédiaire d'une interface de gestion entre l'au moins un cas de VNF et des fonctions de gestion de NFV;
dans lequel l'au moins un cas de VNF inclut une pluralité de politiques et d'indications de politique correspondantes ; et
dans lequel l'indication de politique indique également une priorité de politique entre une politique fournie par VNF et une politique fournie par gestionnaire de NFV si la politique fournie par VNF et la politique fournie par gestionnaire de NFV sont en conflit, et dans lequel le gestionnaire de VNF suit la priorité de politique pour appliquer une politique correspondante.

2. Revendication de procédé 1, dans lequel, si l'indication de politique indique le rejet d'un, de multiples, ou de la totalité des politiques qui sont fournies par le gestionnaire de NFV, une politique de VNF pourvue d'un descripteur de VNF est implémentée.

3. Procédé selon la revendication 1, dans lequel, si l'indication de politique indique la modification des politiques, un descripteur de VNF inclut une indication des politiques de gestionnaire de VNF qui sont acceptées.

4. Procédé selon la revendication 1, comprenant en outre :
la surveillance de l'au moins un cas de VNF pour déterminer si les capacités de l'au moins un cas de VNF ont été mises à jour ; et
si l'au moins un cas de VNF a été mis à jour, la détermination que le gestionnaire de NFV ou l'au moins un cas de VNF détermine ou non l'au moins une de la pluralité de politiques sur la base de l'indication de politique.

5. Procédé selon la revendication 1, dans lequel le gestionnaire de NFV implémente une ou plusieurs de fonctions de gestion de NFV ou de fonctions d'orchestration de NFV.

6. Procédé selon la revendication 1, dans lequel l'indication de politique inclut une structure de sous-feuille pour l'au moins une de la pluralité de politiques.

7. Procédé selon la revendication 1, dans lequel l'indication de politique inclut une structure de sous-feuille pour l'au moins une de la pluralité de politiques et dans lequel la structure de sous-feuille indique le fait que l'au moins une de la pluralité de politiques est, ou n'est pas, une politique de mise à niveau qui sera livrée à partir du gestionnaire de NFV.

8. Gestionnaire de virtualisation de fonction de réseau, NFV, (900), comprenant :
un processeur (904) ; et
un support de stockage non transitoire lisible par ordinateur (906) stockant une programmation pour l'exécution par le processeur, la programmation incluant des instructions pour :
l'obtention d'une pluralité de politiques pour gérer une pluralité de cas de fonction de réseau virtuelle, VNF, sur une plateforme informatique ; et
la définition d'au moins un cas de VNF fonctionnant sur la plateforme informatique, dans lequel l'au moins un cas de VNF possède une définition comprenant une indication de politique indiquant l'acceptation, la modification, ou le rejet d'au moins l'une de la pluralité de politiques gérées par le gestionnaire de NFV ;
dans lequel l'indication de politique peut être configurée par l'intermédiaire d'une interface de gestion entre l'au moins un cas de VNF et des fonctions de gestion de NFV;
dans lequel l'au moins un cas de VNF inclut une pluralité de politiques et d'indications de politique correspondantes ; et
dans lequel l'indication de politique indique également une priorité de politique entre une politique fournie par VNF et une politique fournie par gestionnaire de NFV si la politique fournie par VNF et la politique fournie par gestionnaire de NFV sont en conflit, et dans lequel le gestionnaire de VNF suit la priorité de politique pour appliquer une politique correspondante.

9. Gestionnaire de NFV (900) selon la revendication 8, dans lequel, si l'indication de politique indique le rejet d'un, de multiples, ou de la totalité des politiques qui sont fournies par le gestionnaire de NFV, une politique de VNF pourvue d'un descripteur de VNF est implémentée.

10. Gestionnaire de NFV (900) selon la revendication 8, dans lequel, si l'indication de politique indique la modification des politiques, un descripteur de VNF inclut une indication des politiques de gestionnaire de VNF qui sont acceptées.

11. Gestionnaire de NFV (900) selon la revendication 8, dans lequel la programmation inclut en outre des instructions pour :
la surveillance de l'au moins un cas de VNF pour déterminer si les capacités de l'au moins un cas de VNF ont été mises à jour ; et
si l'au moins un cas de VNF a été mis à jour, la détermination que le gestionnaire de NFV ou l'au moins un cas de VNF détermine ou non l'au moins une de la pluralité de politiques sur la base de l'indication de politique.

12. Gestionnaire de NFV (900) selon la revendication 8, dans lequel le gestionnaire de NFV implémente une ou plusieurs de fonctions de gestion de NFV ou de fonctions d'orchestration de NFV.

13. Gestionnaire de NFV (900) selon la revendication 8, dans lequel l'indication de politique inclut une structure de sous-feuille pour l'au moins une de la pluralité de politiques.

14. Gestionnaire de NFV (900) selon la revendication 8, dans lequel l'indication de politique inclut une structure de sous-feuille pour l'au moins une de la pluralité de politiques et dans lequel la structure de sous-feuille indique le fait que l'au moins une de la pluralité de politiques est, ou n'est pas, une politique de mise à niveau qui sera livrée à partir du gestionnaire de NFV.
